# EUROPÄISCHE PATENTSCHRIFT

(11) **EP 1 378 306 B1**
(45) Veröffentlichungstag und Bekanntmachung des Hinweises auf die Patenterteilung: **15.11.2006**
(21) Anmeldenummer: 03014333.3
(22) Anmeldetag: 26.06.2003
(51) Int. Cl.: B23D 25/02

(54) **Exzenterschere**
Excentric shears
Cisaille excentrique

(30) Priorität: 04.07.2002 DE 20210325 U
(43) Veröffentlichungstag der Anmeldung: 07.01.2004
(73) Patentinhaber: Heinrich Georg GmbH Maschinenfabrik, 57223 Kreuztal (DE)
(72) Erfinder: Seidel, Adalbert, 57078 Siegen (DE); Tröps, Christoph, 57072 Siegen (DE); Folke, Thomas, 57074 Siegen (DE); Runkel, Wolfgang, 57072 Siegen (DE)
(74) Vertreter: Pürckhauer, Rolf

(56) Entgegenhaltungen:
- DE-A1- 3 122 245
- DE-A1- 3 637 625
- GB-A- 1 542 479
- US-A- 3 800 646

## Beschreibung

Die Erfindung betrifft Exzenterscheren zum fliegenden Abschneiden von Platinen von einem kontinuierlich zugeführten Band aus Metall, mit in einem Scherenrahmen angeordnetem Oberund Untermesser sowie mit einem Exzenterantrieb für eine Vorschub- und eine Rückhubbewegung der Messer in und entgegen der Bandlaufrichtung sowie für eine Schnitthubbewegung mindestens eines Messers senkrecht zur Bandlaufebene.

Mitlaufende, auch als fliegende Scheren bezeichnete Querteilscheren werden in Anlagen verwendet, in denen kontinuierlich zugefördertes Band zu Tafeln bzw. Platinen verschiedener Abschnittslängen, Breiten und Formen geschnitten wird. Eine fliegende Schere wird auf Bandgeschwindigkeit beschleunigt und der Schnitt wird bei einem Synchronlauf von Schere und Band, bei dem die Vorschubgeschwindigkeit der Schere mit der Bandgeschwindigkeit übereinstimmt, durchgeführt. Nach dem Schneidvorgang wird die Schere wieder bis zum Stillstand abgebremst.

Zum fliegenden Schneiden von Bandmaterial werden häufig Exzenter- und Doppelexzenterscheren eingesetzt.

Die gattungsgebende DE 36 37 625 A1 beschreibt eine Doppelexzenterschere zum fliegenden Schneiden von Bandmaterial, die mit einem oberen und einem unteren Exzenter ausgestattet ist, die über geregelte Antriebe synchron gegenläufig angetrieben sind und die beim Schneidvorgang den oberen und den unteren Messerträger über Kulissenführungen zum einen zur Ausführung einer Vorschubbewegung des oberen und des unteren Schneidmessers in Bandlaufrichtung mit einer mit der Bandgeschwindigkeit synchronen Vorschubgeschwindigkeit und einer Rückhubbewegung und zum anderen zur Ausführung einer Schnitthubbewegung der beiden Schneidmesser senkrecht zur Bandlaufebene antreiben. Die beiden Exzenter, die die Messerträger für das obere und untere Schneidmesser zur Ausführung der Vorschub- und Schnitthubbewegung antreiben, weisen den gleichen Exzenterradius auf.

Da an die Schnitthubbewegung der Schneidmesser andere Anforderungen als an die Vorschubbewegung der Schneidmesser gestellt werden, ist die Wahl des Exzenterradius immer ein Kompromiß und damit die Schnittleistung der Schere nicht optimal. Ein weiterer Nachteil der Doppelexzenterschere beruht darauf, daß aufgrund der Auf- und Abwärtsbewegung der beiden Messerträger durch die nach einem Schnitt folgende Abwärtsbewegung des Untermessers Freiräume im Einlauf- und Auslaufbereich der Schere entstehen, so daß sich die Übernahme des Bandmaterials von der Schere vorgeordneten und die Übergabe der abgeschnittenen Platinen an der Schere nachgeschaltete Transporteinrichtungen schwierig gestaltet.

Der Erfindung liegt die Aufgabe zugrunde, eine Exzenterschere der gattungsgemäßen Art zu entwickeln, die sich durch eine optimale Schnittleistung und eine hohe Funktionssicherheit auszeichnet.

Diese Aufgabe wird erfindungsgemäß gelöst durch die Exzenterscheren gemäß den Patentansprüchen 1, 4, 7 und 8.

Die Unteransprüche beinhalten vorteilhafte und zweckmäßige Weiterbildungen der Erfindung.

Die erfindungsgemäße Exzenterschere zeichnet sich durch folgende Vorteile aus:

Das bei der fliegend schneidenden Exzenterschere verwirklichte Antriebsprinzip mittels Exzenterwellen, die einen ersten Exzenterzapfen mit einem bestimmten Exzenterradius für den Vorschubantrieb der Schere und einen zweiten Exzenterzapfen mit einem zu dem Exzenterradius des ersten Exzenterzapfens unterschiedlichen Exzenterradius für den Schnitthubantrieb der Schere aufweisen, werden Vorschub- und Schnitthub der Schneidmesser der Schere entkoppelt und der Exzenterradius der Exzenterwelle für den Vorschub kann der Länge der vom Band abzuschneidenden Platinen oder Tafeln angepaßt werden, so daß bei einer entsprechenden Drehzahlregelung des Antriebsmotors der Exzenterwelle eine optimale Schnittleistung der Schere erreicht wird. Das für den Antrieb der Schere gewählte "Kreuzschlittensystem" ermöglicht es, unabhängig vom Vorschub der Schere einen großen Schnitthub einzustellen und somit dickes Bandmaterial zu schneiden. Durch die horizontale Führung des Untermessers ergeben sich verringerte Freiräume im Ein- und Auslaufbereich der Schere, so daß die Übernahme des Bandmaterials von der Schere vorgeordneten und die Übergabe der abgeschnittenen Platinen an der Schere nachgeschaltete Transporteinrichtungen keine Schwierigkeiten bereitet und dadurch eine hohe Funktionssicherheit der Schere gewährleistet ist.

Die Erfindung ist nachstehend anhand von schematischen Zeichnungsfiguren erläutert, die folgendes darstellen:
- Fig. 1a und 1b: Seitenansichten einer ersten Ausführungsform einer Exzenterschere mit einer Exzenterwelle mit Exzenterzapfen für den Vorschub- und den Rückhubantrieb der Messerträger sowie den Schnitthubantrieb des oberen Messerträgers in zwei Stellungen der Schneidmesser zwischen zwei Schnitten beim Rückhub und beim Vorschub der Messer,
- Fig. 1c: eine Seitenansicht der Exzenterschere mit der Schneidstellung der Messer,
- Fig. 2: eine Vorderansicht der mit einem Schwenkantrieb für die Messerträger ausgestatteten Exzenterschere nach den Figuren 1a bis 1 c,
- Fig. 3: eine Vorderansicht der Exzenterschere mit einer abgeänderten Ausführung des Schwenkantriebs der Messerträger,
- Fig. 4: eine Draufsicht auf den unteren Messerträger mit einer dritten Ausführungsform des Schwenkantriebs der Messerträger und
- Fig. 5: eine Seitenansicht einer weiteren Ausführungsform einer Exzenterschere mit zwei Exzenterwellen mit jeweils einem Exzenterzapfen für den Vorschub- und den Rückhubantrieb der Messerträger.

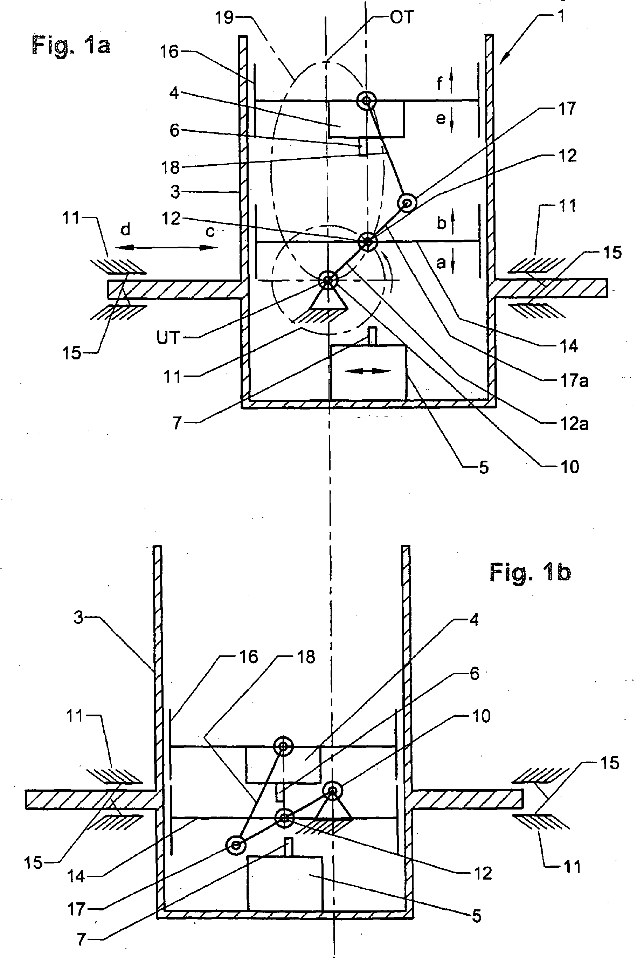

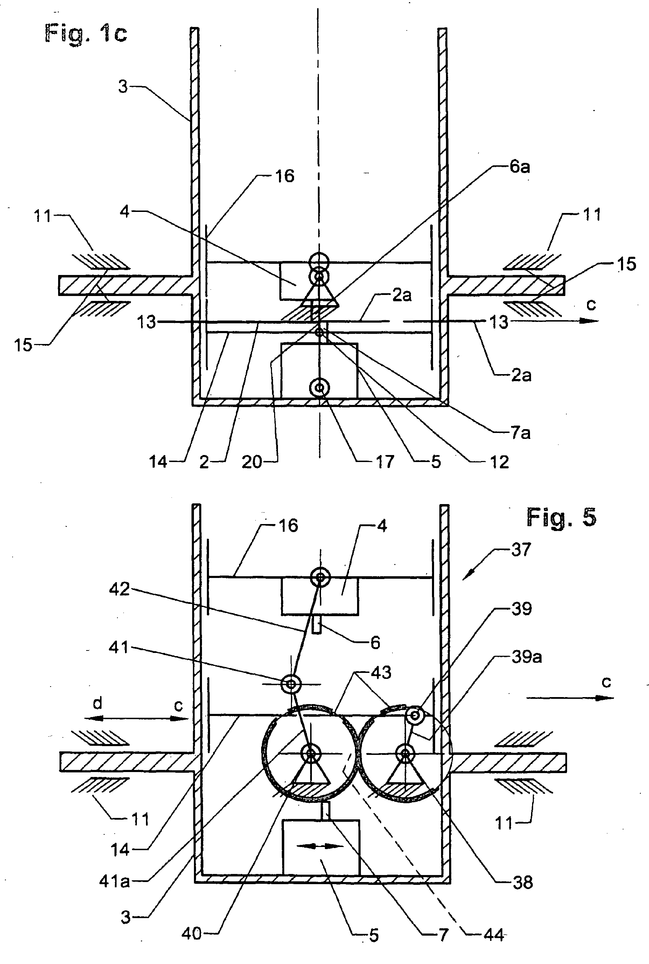

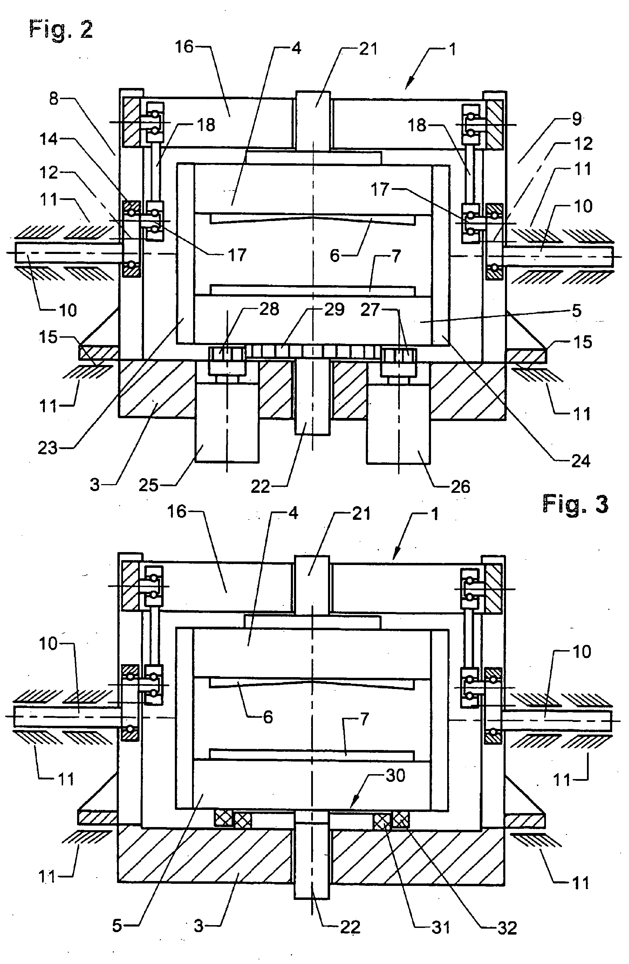

Die Exzenterschere 1 nach den Figuren 1 und 2 zum fliegenden Abschneiden von Platinen 2a von einem kontinuierlich zugeführten Band 2 aus Blech ist mit einem Fahrrahmen 3 zur Aufnahme von zwei Messerträgern 4, 5 für ein Obermesser 6 und ein Untermesser 7 ausgestattet, der durch zwei an den beiden Stirnseiten 8, 9 angeordnete, koaxial Exzenterwellen 10 mit elektrischen Antriebsmotoren mit Drehzahlregelung angetrieben wird, die in dem auf einem Fundament fest verankerten Grundrahmen 11 der Exzenterschere 1 drehbar gelagert sind. Jede Exzenterwelle 1 weist einen ersten Exzenterzapfen 12 auf, der mit einem in dem Fahrrahmen 3 senkrecht zur Bandlaufebene 13-13 in Pfeilrichtung a, b verschiebbar geführten Kulissenstein 14 gelenkig verbunden ist, und der Fahrrahmen 3 ist mittels der Exzenterwellen 10 und der Kulissensteine 14 auf Führungen 15 des Grundrahmens 11 parallel zur Bandlaufebene 13-13 zur Ausführung einer Vorschubund Rückhubbewegung der Messer 6, 7 in Pfeilrichtung c, d in und entgegen der Bandlaufrichtung verfahrbar.

Die Exzenterschere 1 ist ferner mit einem Schnittrahmen 16 zur Befestigung des Messerträgers 4 für das Obermesser 6 ausgerüstet, der zur Ausführung einer Schnitthubbewegung des Obermessers 6 in Pfeilrichtung e, f in dem Fahrrahmen 3 senkrecht zur Bandlaufebene 13-13 verschiebbar geführt ist. Der Schnittrahmen wird durch die Exzenterwellen 10 angetrieben, die über einen zweiten Exzenterzapfen 17 mit einem zu dem Exzenterradius 12a des ersten Exzenterzapfens 12 unterschiedlichen Exzenterradius 17a und eine Pleuelstange 18 mit dem Schnittrahmen 16 verbunden sind.

Bei einem Schneidvorgang führt der an dem Fahrrahmen 3 befestigte untere Messerträger 5 mit dem Untermesser 7 eine Vorschub- und Rückhubbewegung in Pfeilrichtung c, d parallel zur Bandlaufebene 13-13 aus und der obere Messerträger 4 mit dem Obermesser 6 beschreibt aufgrund der Vorschub- und Rückhubbewegung c, d des Fahrrahmens 3 und der Schnitthubbewegung e, f des Schnittrahmens 16 eine elliptische Bewegung 19 zwischen einem oberen Totpunkt OT und einem unteren Totpunkt UT, in dessen Bereich Ober- und Untermesser 6, 7 eine Schneidposition 6a, 7a unter Bildung eines Schnittspaltes 20 zwischen den Messerschneiden zur Ausführung eines Schnittes quer zur Bandlaufrichtung c einnehmen.

Die nicht dargestellten elektrischen Antriebsmotoren der beiden Exzenterwellen 10 der Schere 1 werden über Getriebe und eine Gleichlaufwelle synchronisiert.

Bezüglich des Vorschubs ist mit der Wahl des Exzenterradius die "synchrone Länge" der Exzenterschere festgelegt. Die synchrone Länge wird im wesentlichen aus dem Exzenterradius multipliziert mit 2π gebildet und entsteht, wenn mit konstanter Winkelgeschwindigkeit gefahren wird. Sollen Platinen bzw. Blechtafeln mit einer kürzeren Länge als die synchrone Länge geschnitten werden, so muß die Schere nach dem Schnitt beschleunigt und vor dem nächsten Schnitt abgebremst werden. Die dabei entstehenden Drehmomente würden bei konstanter Winkelgeschwindigkeit und kleiner werdenden Abschnittlängen so groß, daß die Antriebe schnell an ihre Grenzen geführt werden. Um dies zu vermeiden, muß die Anlagengeschwindigkeit reduziert werden, was zur Minimierung der Produktionsleistung führt. Für größere Abschnittlängen als die synchrone Länge muß die Schere entsprechend nach dem Schnitt abgebremst und vor dem nächsten Schnitt wieder beschleunigt werden. Ein variabler Vorschubexzenterradius erlaubt es, die Schwere an die bevorzugte Abschnittlänge anzupassen, d.h. ein kleinerer Exzenterradius für kurze Blechabschnitte und ein größerer für lange Blechabschnitte.

Bezüglich des Schnitthubes muß der gewählte Exzenterradius in der Lage sein, den Arbeitshub zu realisieren. Die Exzenterwellenstellung beim Anschneiden des Bandmaterials darf dabei einen bestimmten Winkelwert nicht überschreiten. Der eigentliche Arbeitshub wird gebildet aus Materialstärke, Überhub und der Messerschräge des dachförmigen Messers. Bei einem größeren Messerwinkel erhöht sich der erforderliche Schnitthub, die Schnittkraft für vergleichbares Material verringert sich. Die Stellung der Exzenterwelle beim Anschnitt des Bandmaterials ist entscheidend für die Beschleunigungsmomente, die bei der Synchronisation von Scherenvorschubgeschwindigkeit und Anlagengeschwindigkeit entstehen. Der Winkel zwischen Exzenterzapfen und dem unteren Totpunkt UT sollte daher 30° nicht überschreiten.

Abweichend von der vorbeschriebenen Scherenausführung kann der Vorschub- und Schnitthubantrieb der Schere mittels einer Exzenterwelle mit zwei Exzenterzapfen erfolgen, die einen gemeinsamen Exzenterradius aufweisen, sowie mit oder ohne Pleuelstange.

Des weiteren besteht die Möglichkeit, die Pleuelstange durch einen Kulissenstein und den Kulissenstein durch eine Pleuelstange zu ersetzen, so daß die Vorschubbewegung mittels Pleuelstange und die Schnitthubbewegung mittels Kulissenstein bewirkt wird.

Die Exzenterschere 1 ist mit einer Schwenkvorrichtung für Obermesser 6 und Untermesser 7 zur Ausführung von Schrägschnitten mit einem einstellbaren Winkel schräg zur Bandlaufrichtung c ausgestattet. Die Schwenkvorrichtung ist gekennzeichnet durch eine drehbare Lagerung des oberen Messerträgers 4 im Schnittrahmen 16 und des unteren Messerträgers 5 im Fahrrahmen 3 mittels Lagerzapfen 21, 22, eine Parallelführung des den Schnitthub ausführenden oberen Messerträgers 4 zum unteren Messerträger 5 in an diesem angeordneten Führungssäulen 23, 24 sowie einen Schwenkantrieb der Messerträger 4, 5 durch zwei in den Fahrrahmen 3 diametral gegenüberliegend eingebaute Elektromotoren 25, 26 mit Antriebsritzeln 27, 28, die mit einem auf dem Lagerzapfen 22 des unteren Messerträgers 5 sitzenden Zahnrad 29 zusammenwirken.

Bei dem in Figur 3 dargestellten Schwenkantrieb der Messerträger 4, 5 der Exzenterschere 1 kommt ein Torquemotor 30 zum Einsatz, dessen Kern 31 am Fahrrahmen 3 und dessen drehbar angetriebener Außenring 32 am unteren Messerträger 5 befestigt ist.

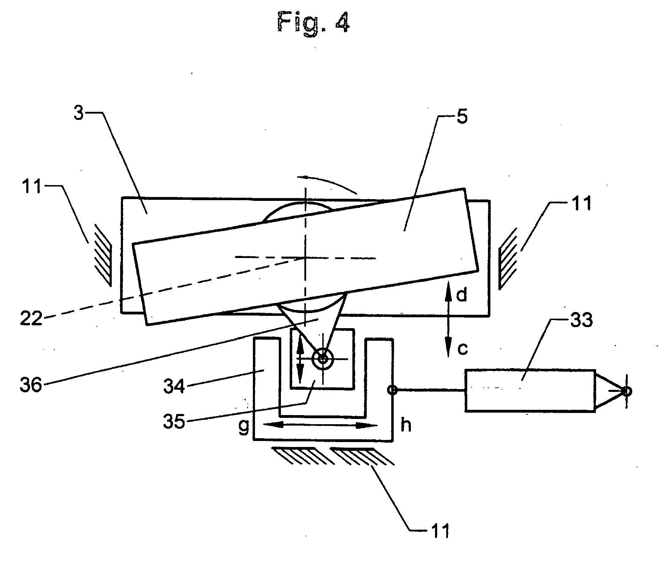

Bei dem in Figur 4 dargestellten Schwenkantrieb von Oberund Untermesser 6, 7 einer Exzenterschere 1 wird ein Kreuzschlittensystem verwendet, das einen am Grundrahmen 11 befestigten Stellzylinder 33 zur Linearverstellung eines auf dem Grundrahmen 11 verschiebbar geführten Schiebers 34 quer zur Bandlaufrichtung c in Pfeilrichtung g, h sowie einen in dem Schieber 34 in und gegen der Bandlaufrichtung c verschiebbar geführten Gleitstein 35 umfaßt, der mit einem auf dem Lagerzapfen 22 des unteren Messerträgers 5 fest angeordneten Schwenkarm 36 gelenkig verbunden ist.

Durch die Anordnung der wesentlichen Bauelemente des Schwenkantriebs dieser Schwenkvorrichtung auf dem Grundrahmen wird gegenüber den Schwenkvorrichtungen nach den Figuren 2 und 3 die Schwenkleistung aufgrund einer Verringerung der zu bewegenden Bauteile vermindert, so daß die Schnittleistung der Schere erhöht werden kann.

Figur 5 zeigt eine weitere Ausführungsform einer Exzenterschere 37, die mit einem Fahrrahmen 3 zur Aufnahme von zwei Messerträgern 4, 5 für ein Obermesser 6 und ein Untermesser 7 ausgestattet ist, der mittels zweier an den beiden Stirnseiten 8, 9 des Fahrrahmens 3 angeordneter, koaxialer, motorisch angetriebener Exzenterwellen 38, die in einem Grundrahmen 11 drehbar gelagert sind und jeweils einen Exzenterzapfen 39 aufweisen, der mit einem in dem Fahrrahmen 3 senkrecht zur Bandlaufebene 13-13 in Pfeilrichtung a, b verschiebbar geführten Kulissenstein 14 gelenkig verbunden ist, auf Führungen 15 des Grundrahmens 11 parallel zur Bandlaufebene 13-13 zur Ausführung einer Vorschub- und einer Rückhubbewegung der Schneidmesser 6, 7 in und entgegen der Bandlaufrichtung c, d verfahrbar ist.

Die Exzenterschere 37 ist ferner mit einem Schnittrahmen 16 zur Befestigung des Messerträgers 4 für das Obermesser 6 ausgerüstet, der zur Ausführung einer Schnitthubbewegung des Obermessers 6 in Pfeilrichtung e, f in dem Fahrrahmen 3 senkrecht zur Bandlaufebene 13-13 verschiebbar geführt ist. Der Schnittrahmen wird durch zwei weitere an den beiden Stirnseiten 8, 9 des Fahrrahmens 3 parallel zu den Exzenterwellen 38 für den Vorschub angeordnete, koaxiale, motorisch angetriebene Exzenterwellen 40 angetrieben werden, die jeweils über einen Exzenterzapfen 41 und eine Pleuelstange 42 mit dem Schnittrahmen 16 verbunden sind, wobei der Exzenterzapfen 39 der Exzenterwellen 38 für den Vorschubantrieb von Ober- und Untermesser 6, 7 und der Exzenterzapfen 41 der Exzenterwellen 40 für den Schnitthubantrieb des Obermessers 6 unterschiedliche Exzenterradien 39a , 41a aufweisen.

Die paarweise an den beiden Stirnseiten 8, 9 des Fahrrahmens 3 angeordneten Exenterwellen 38, 40 für den Vorschub und den Schnitthub der Messer 6, 7 sind über ein Zahnradgetriebe 43 miteinander gekoppelt und werden durch einen gemeinsamen Antriebsmotor 44 angetrieben.

Der untere Messerträger 5 für das Untermesser 7 ist an dem Fahrrahmen 3 befestigt.

Die vorbeschriebenen Exzenterscheren 1, 37 mit einer vertikalen Anordnung zur horizontalen Passline des Bandes können auch in einer zur Horizontalen geneigten oder angehobenen Stellung montiert werden, wobei in diesem Fall die Passline des Bandes unter einem entsprechenden Winkel schräg zur Horizontalen verläuft.

## Patentansprüche

1. Exzenterschere (1) zum fliegenden Abschneiden von Platinen (2a) von einem kontinuierlich zugeführten Band (2) aus Metall, mit in einem Scherenrahmen angeordnetem Ober- und Untermesser (6, 7) sowie mit einem Exzenterantrieb (10) für eine Vorschub- und eine Rückhubbewegung der Messer in und entgegen der Bandlaufrichtung (c) sowie für eine Schnitthubbewegung (e, f) mindestens eines Messers (6) senkrecht zur Bandlaufebene (13-13), **gekennzeichnet durch** einen Fahrrahmen (3) zur Aufnahme von zwei Messerträgern (4, 5) für ein Obermesser (6) und ein Untermesser (7), der (3) mittels mindestens einer in einem feststehenden Grundrahmen (11) drehbar gelagerten, motorisch angetriebenen Exzenterwelle (10) mit einem ersten Exzenterzapfen (12), der mit einem in dem Fahrrahmen (3) senkrecht (Pfeilrichtung a, b) zur Bandlaufebene (13-13) verschiebbar geführten Kulissenstein (14) gelenkig verbunden ist, auf Führungen (15) des Grundrahmens (11) parallel zur Bandlaufebene (13-13) zur Ausführung einer Vorschub- und einer Rückhubbewegung der Messer (6, 7) in und entgegen der Bandlaufrichtung (c, d) verfahrbar ist, und einen Schnittrahmen (16) zur Befestigung des Messerträgers (4) für das Obermesser (6), der (16) zur Ausführung einer Schnitthubbewegung (Pfeilrichtung e, f) des Obermessers (6) in dem Fahrrahmen (3) senkrecht zur Bandlaufebene (13-13) verschiebbar geführt ist und **durch** die Exzenterwelle (10) angetrieben wird, die über einen zweiten Exzenterzapfen (17) und eine Pleuelstange (18) mit dem Schnittrahmen (16) verbunden ist, wobei der untere Messerträger (5) mit dem Untermesser (7) an dem Fahrrahmen (3) befestigt ist und bei einem Schneidvorgang mit diesem eine Vorschub- und Rückhubbewegung (c, d) parallel zur Bandlaufebene (13-13) ausführt und der obere Messerträger (4) mit dem Obermesser (6) aufgrund der Vorschub- und Rückhubbewegung (c, d) des Fahrrahmens (3) und der Schnitthubbewegung (e, f) des Schnittrahmens (16) eine elliptische Bewegung (19) zwischen einem oberen Totpunkt (OT) und einem unteren Totpunkt (UT) beschreibt, in dessen Bereich Ober- und Untermesser (6, 7) eine Schneidposition (6a, 7a) unter Bildung eines Schnittspaltes (20) zwischen den Messerschneiden zur Ausführung eines Schnittes quer zur Bandlaufrichtung (c) einnehmen.

2. Exzenterschere nach Anspruch 1, **dadurch gekennzeichnet, daß** die beiden Exzenterzapfen (12, 17) der Exzenterwelle (10) unterschiedliche Exzenterradien (12a, 17a) aufweisen.

3. Exzenterschere nach Anspruch 1, **gekennzeichnet durch** einen gemeinsamen Exzenterradius beider Exzenterzapfen (12, 17) der Exzenterwelle (10) sowie einen Exzenterantrieb des. Schnittrahmens (16) mit einer Pleuelstange (18).

4. Exzenterschere (1) zum fliegenden Abschneiden von Platinen (2a) von einem kontinuierlich zugeführten Band (2) aus Metall, mit in einem Scherenrahmen angeordnetem Ober- und Untermesser (6, 7) sowie mit einem Exzenterantrieb (10) für eine Vorschub- und eine Rückhubbewegung der Messer in und entgegen der Bandlaufrichtung (c) sowie für eine Schnitthubbewegung (e, f) mindestens eines Messers (6) senkrecht zur Bandlaufebene (13-13), **gekennzeichnet durch** einen Fahrrahmen (3) zur Aufnahme von zwei Messerträgern (4, 5) für ein Obermesser (6) und ein Untermesser (7), der (3) mittels mindestens einer in einem feststehenden Grundrahmen (11) drehbar gelagerten, motorisch angetriebenen Exzenterwelle (10) mit einem ersten Exzenterzapfen (12), der mit einem in dem Fahrrahmen (3) senkrecht (Pfeilrichtung a, b) zur Bandlaufebene (13-13) verschiebbar geführten Kulissenstein (14) gelenkig verbunden ist, auf Führungen (15) des Grundrahmens (11) parallel zur Bandlaufebene (13-13) zur Ausführung einer Vorschub- und einer Rückhubbewegung der Messer (6, 7) in und entgegen der Bandlaufrichtung (c, d) verfahrbar ist, und einen Schnittrahmen (16) zur Befestigung des Messerträgers (4) für das Obermesser (6), der (16) zur Ausführung einer Schnitthubbewegung (Pfeilrichtung e, f) des Obermessers (6) in dem Fahrrahmen (3) senkrecht zur Bandlaufebene (13-13) verschiebbar geführt ist und **durch** die Exzenterwelle (10) angetrieben wird, die über einen zweiten Exzenterzapfen (17) mit dem gleichen Exzenterradius wie der erste Exzenterzapfen (21) mit dem Schnittrahmen (16) verbunden ist, wobei der untere Messerträger (5) mit dem Untermesser (7) an dem Fahrrahmen (3) befestigt ist und bei einem Schneidvorgang mit diesem eine Vorschub- und Rückhubbewegung (c, d) parallel zur Bandlaufebene (13-13) ausführt und der obere Messerträger (4) mit dem Obermesser (6) aufgrund der Vorschub- und Rückhubbewegung (c, d) des Fahrrahmens (3) und der Schnitthubbewegung (e, f) des Schnittrahmens (16) eine elliptische Bewegung (19) zwischen einem oberen Totpunkt (OT) und einem unteren Totpunkt (UT) beschreibt, in dessen Bereich Ober- und Untermesser (6, 7) eine Schneidposition (6a, 7a) unter Bildung eines Schnittspaltes (20) zwischen den Messerschneiden zur Ausführung eines Schnittes quer zur Bandlaufrichtung (c) einnehmen.

5. Exzenterschere nach einem der Ansprüche 1 bis 4, **gekennzeichnet durch** einen Antrieb mittels zwei an den beiden Stirnseiten (8, 9) des Fahrrahmens (3) angeordneten, koaxialen Exzenterwellen (10) mit einem elektrischen Antriebsmotor mit Drehzahlregelung, die im Grundrahmen (11) drehbar gelagert sind.

6. Exzenterschere nach Anspruch 5, **gekennzeichnet durch** eine Synchronisierung der Antriebsmotoren der beiden Exzenterwellen (10) über Getriebe und eine Gleichlaufwelle.

7. Exzenterschere (1) zum fliegenden Abschneiden von Platinen (2a) von einem kontinuierlich zugeführten Band (2) aus Metall, mit in einem Scherenrahmen angeordnetem Ober- und Untermesser (6, 7) sowie mit einem Exzenterantrieb (10) für eine Vorschub- und eine Rückhubbewegung der Messer in und entgegen der Bandlaufrichtung (c) und für eine Schnitthubbewegung (e, f) mindestens eines Messers (6) senkrecht zur Bandlaufebene (13-13), **gekennzeichnet durch** einen Fahrrahmen (3) zur Aufnahme von zwei Messerträgern (4, 5) für ein Obermesser (6) und ein Untermesser (7), der (3) mittels mindestens einer in einem feststehenden Grundrahmen (11) drehbar gelagerten, motorisch angetriebenen Exzenterwelle (10) mit einem ersten Exzenterzapfen (12), der **durch** eine Pleuelstange mit dem Fahrrahmen (3) gelenkig verbunden ist, auf Führungen (15) des Grundrahmens (11) parallel zur Bandlaufebene (13-13) zur Ausführung einer Vorschub- und einer Rückhubbewegung der Messer (6, 7) in und entgegen der Bandlaufrichtung (c, d) verfahrbar ist, und einen Schnittrahmen (16) zur Befestigung des Messerträgers (4) für das Obermesser (6), der (16) zur Ausführung einer Schnitthubbewegung (Pfeilrichtung e, f) des Obermessers (6) in dem Fahrrahmen (3) senkrecht zur Bandlaufebene (13-13) verschiebbar geführt ist und **durch** die Exzenterwelle (10) angetrieben wird, die über einen zweiten Exzenterzapfen (17) und einen in dem Fahrrahmen (3) senkrecht zur Bandlaufebene (13-13) verschiebbaren Kulissenstein mit dem Schnittrahmen (16) verbunden ist, wobei der untere Messerträger (5) mit dem Untermesser (7) an dem Fahrrahmen (3) befestigt ist und bei einem Schneidvorgang mit diesem eine Vorschub- und Rückhubbewegung (c, d) parallel zur Bandlaufebene (13-13) ausführt und der obere Messerträger (4) mit dem Obermesser (6) aufgrund der Vorschub- und Rückhubbewegung (c, d) des Fahrrahmens (3) und der Schnitthubbewegung (e, f) des Schnittrahmens (16) eine elliptische Bewegung (19) zwischen einem oberen Totpunkt (OT) und einem unteren Totpunkt (UT) beschreibt, in dessen Bereich Ober- und Untermesser (6, 7) eine Schneidposition (6a, 7a) unter Bildung eines Schnittspaltes (20) zwischen den Messerschneiden zur Ausführung eines Schnittes quer zur Bandlaufrichtung (c) einnehmen.

8. Exzenterschere (1) zum fliegenden Abschneiden von Platinen (2a) von einem kontinuierlich zugeführten Band (2) aus Metall, mit in einem Scherenrahmen angeordnetem Ober- und Untermesser (6, 7) sowie mit einem Exzenterantrieb (10) für eine Vorschub- und eine Rückschubbewegung der Messer in und entgegen der Bandlaufrichtung (c) sowie für eine Schnitthubbewegung (e, f) mindestens eines Messers (6) senkrecht zur Bandlaufebene (13-13), **gekennzeichnet durch** einen Fahrrahmen (3) zur Aufnahme von zwei Messerträgern (4, 5) für ein Obermesser (6) und ein Untermesser (7), der (3) mittels zweier an den beiden Stirnseiten (8, 9) des Fahrrahmens (3) angeordneter, koaxialer, motorisch angetriebener Exzenterwellen (38), die in einem Grundrahmen (11) drehbar gelagert sind und jeweils einen Exzenterzapfen (39) aufweisen, der mit einem in dem Fahrrahmen (3) senkrecht zur Bandlaufebene (13-13) verschiebbar geführten Kulissenstein (14) gelenkig verbunden ist, auf Führungen (15) des Grundrahmens (11) parallel zur Bandlaufebene (13-13) zur Ausführung einer Vorschub- und einer Rückhubbewegung der Schneidmesser (6, 7) in und entgegen der Bandlaufrichtung (c, d) verfahrbar ist, und einen Schnittrahmen (16) zur Befestigung des Messerträgers (4) des Obermessers (6), der zur Ausführung einer Schnitthubbewegung des Obermessers (6) in dem Fahrrahmen (3) senkrecht zur Bandlaufebene verschiebbar geführt ist und **durch** zwei weitere an den beiden Stirnseiten (8, 9) des Fahrrahmens (3) parallel zu den Exzenterwellen (38) für den Vorschub angeordnete, koaxiale, motorisch angetriebene Exzenterwellen (40) angetrieben wird, die jeweils über einen Exzenterzapfen (41) und eine Pleuelstange (42) mit dem Schnittrahmen (16) verbunden sind, wobei der Exzenterzapfen (39) der Exzenterwellen (38) für den Vorschubantrieb von Ober- und Untermesser (6, 7) und der Exzenterzapfen (41) der Exzenterwellen (40) für den Schnitthubantrieb des Obermessers (6) unterschiedliche Exzenterradien (39a, 41a) aufweisen, die paarweise an den beiden Stirnseiten (8, 9) des Fahrrahmens (3) angeordneten Exzenterwellen (38, 40) für den Vorschub und den Schnitthub der Messer (6, 7) über ein Getriebe (43), insbesondere ein Zahnrad- oder Zugmittelgetriebe, miteinander gekoppelt sind und **durch** einen gemeinsamen Antriebsmotor (44) angetrieben werden und der untere Messerträger (5) für das Untermesser (7) an dem Fahrrahmen (3) befestigt ist.

9. Exzenterschere nach einem der Ansprüche 1 bis 8, **gekennzeichnet durch** eine Schwenkvorrichtung für Obermesser (6) und Untermesser (7) zur Ausführung von Schrägschnitten mit einem einstellbaren Winkel schräg zur Bandlaufrichtung.

10. Exzenterschere nach Anspruche 9, **gekennzeichnet durch** eine drehbare Lagerung des oberen Messerträgers (4) im Schnittrahmen (16) und des unteren Messerträgers (5) im Fahrrahmen (3), eine Parallelführung des den Schnitthub ausführenden oberen Messerträgers (4) zum unteren Messerträger (5) in an diesem angeordneten Führungssäulen (23, 24) sowie einen Schwenkantrieb der Messerträger (4, 5) mittels mitfahrender, am Fahrrahmen (3) und/oder Schnittrahmen (16) angebrachter Antriebe oder eines am Grundrahmen (11) befestigten ortsfesten Antriebs.

11. Exzenterschere nach Anspruch 10, **gekennzeichnet durch** die Verwendung von einem oder mehreren Elektromotoren, insbesondere Torquemotoren , Hydraulikmotoren oder Hydraulikzylinder für den Schwenkantrieb der Messerträger (4, 5) .

12. Exzenterschere nach Anspruch 11, **gekennzeichnet durch** zwei in den Fahrrahmen (3) diametral gegenüberliegend eingebaute Elektromotoren (25, 26) mit Antriebsritzeln (27, 28), die mit einem auf dem Lagerzapfen (22) des unteren Messerträgers (5) sitzenden Zahnrad (29) zusammenwirken.

13. Exzenterschere nach Anspruch 11, **gekennzeichnet durch** einen Schwenkantrieb der Messerträger (4, 5) mittels eines Torquemotors (30), dessen Kern (31) am Fahrrahmen (3) und dessen drehbar angetriebener Außenring (32) am unteren Messerträger (5) befestigt ist.

14. Exzenterschere nach Anspruch 10 und 11, **gekennzeichnet durch** einen Schwenkantrieb von Ober- und Untermesser (6, 7) mittels eines Kreuzschlittensystems, das einen am Grundrahmen (11) befestigten Stellzylinder (33) zur Linearverstellung eines auf dem Grundrahmen (11) verschiebbar geführten Schiebers (34) quer (g, h) zur Bandlaufrichtung (c) sowie einen in dem Schieber (34) in und entgegen der Bandlaufrichtung (c) verschiebbar geführten Gleitstein (35) umfaßt, der mit einem auf dem Lagerzapfen (22) des unteren Messerträgers (5) fest angeordneten Schwenkarm (36) gelenkig verbunden ist.

15. Exzenterschere nach einem der Ansprüche 1 bis 14, **gekennzeichnet durch** eine zur Horizontalen geneigte oder angehobene Stellung der Schere (1, 37).

## Claims

1. Eccentric shears (1) for cutting off sheets (2a) from a continuously fed metal strip (2) in an unsupported manner, with an upper and lower blade (6, 7) arranged in a scissor frame and also with an eccentric drive mechanism (10) for a feed and return movement of the blades in and against the running direction (c) of the strip and also for a cutting stroke movement (e, f) of at least one blade (6) perpendicular to the running plane (13-13) of the strip, **characterised by** a running frame (3) to receive two blade supports (4, 5) for an upper blade (6) and a lower blade (7), which frame (3) can be moved by means of at least one motor-driven eccentric shaft (10) rotatably disposed in a fixed base frame (11) with a first eccentric pin (12), which is articulated to a slide block (14) guided in the running frame (3) to be displaceable perpendicular (arrow direction a, b) to the running plane (13-13) of the strip, on guide means (15) of the base frame (11) parallel to the running plane (13-13) of the strip to perform a feed and a return movement of the blades (6, 7) in and against the running direction (c, d) of the strip, and by a cutting frame (16) for fastening the blade support (4) for the upper blade (6), which frame (16) is guided to be displaceable perpendicular to the running plane (13-13) of the strip to perform a cutting stroke movement (arrow direction e, f) of the upper blade (6) in the running frame (3) and is driven by the eccentric shaft (10), which is connected to the cutting frame (16) by means of a second eccentric pin (17) and a connecting rod (18), wherein the lower blade support (5) with the lower blade (7) is fastened to the running frame (3) and with this during a cutting process performs a feed and return movement (c, d) parallel to the running plane (13-13) of the strip, and because of the feed and return movement (c, d) of the running frame (3) and the cutting stroke movement (e, f) of the cutting frame (16), the upper blade support (4) with the upper blade (6) describes an elliptical movement (19) between a top dead centre (OT) and a bottom dead centre (UT), in the region of which the upper and lower blades (6, 7) assume a cutting position (6a, 7a) forming a cutting gap (20) between the blade edges to perform a cut transversely to the running direction (c) of the strip.

2. Eccentric shears according to Claim 1, **characterised in that** the two eccentric pins (12, 17) of the eccentric shaft (10) have different eccentric radii (12a, 17a).

3. Eccentric shears according to Claim 1, **characterised by** a common eccentric radius of both eccentric pins (12, 17) of the eccentric shaft (10) as well as by an eccentric drive mechanism of the cutting frame (16) with a connecting rod (18).

4. Eccentric shears (1) for cutting off sheets (2a) from a continuously fed metal strip (2) in an unsupported manner, with an upper and lower blade (6, 7) arranged in a scissor frame and also with an eccentric drive mechanism (10) for a feed and return movement of the blades in and against the running direction (c) of the strip and also for a cutting stroke movement (e, f) of at least one blade (6) perpendicular to the running plane (13-13) of the strip, **characterised by** a running frame (3) to receive two blade supports (4, 5) for an upper blade (6) and a lower blade (7), which frame (3) can be moved by means of at least one motor-driven eccentric shaft (10) rotatably disposed in a fixed base frame (11) with a first eccentric pin (12), which is articulated to a slide block (14) guided in the running frame (3) to be displaceable perpendicular (arrow direction a, b) to the running plane (13-13) of the strip, on guide means (15) of the base frame (11) parallel to the running plane (13-13) of the strip to perform a feed and a return movement of the blades (6, 7) in and against the running direction (c, d) of the strip, and by a cutting frame (16) for fastening the blade support (4) for the upper blade (6), which frame (16) is guided to be displaceable perpendicular to the running plane (13-13) of the strip to perform a cutting stroke movement (arrow direction e, f) of the upper blade (6) in the running frame (3) and is driven by the eccentric shaft (10), which is connected to the cutting frame (16) by means of a second eccentric pin (17) with the same eccentric radius as the first eccentric pin (21), wherein the lower blade support (5) with the lower blade (7) is fastened to the running frame (3) and with this during a cutting process performs a feed and return movement (c, d) parallel to the running plane (13-13) of the strip, and because of the feed and return movement (c, d) of the running frame (3) and the cutting stroke movement (e, f) of the cutting frame (16), the upper blade support (4) with the upper blade (6) describes an elliptical movement (19) between a top dead centre (OT) and a bottom dead centre (UT), in the region of which the upper and lower blades (6, 7) assume a cutting position (6a, 7a) forming a cutting gap (20) between the blade edges to perform a cut transversely to the running direction (c) of the strip.

5. Eccentric shears according to one of Claims 1 to 4, **characterised by** a drive by means of two coaxial eccentric shafts (10), which are arranged on the two face sides (8, 9) of the running frame (3), with an electric drive motor with speed governor, which are rotatably disposed in the base frame (11).

6. Eccentric shears according to Claim 5, **characterised by** a synchronisation of the drive motors of the two eccentric shafts (10) by transmission and a synchro shaft.

7. Eccentric shears (1) for cutting off sheets (2a) from a continuously fed metal strip (2) in an unsupported manner, with an upper and lower blade (6, 7) arranged in a scissor frame and also with an eccentric drive mechanism (10) for a feed and return movement of the blades in and against the running direction (c) of the strip and for a cutting stroke movement (e, f) of at least one blade (6) perpendicular to the running plane (13-13) of the strip, **characterised by** a running frame (3) to receive two blade supports (4, 5) for an upper blade (6) and a lower blade (7), which frame (3) can be moved by means of at least one motor-driven eccentric shaft (10) rotatably disposed in a fixed base frame (11) with a first eccentric pin (12), which is articulated to the running frame (3) by a connecting rod, on guide means (15) of the base frame (11) parallel to the running plane (13-13) of the strip to perform a feed and a return movement of the blades (6, 7) in and against the running direction (c, d) of the strip, and by a cutting frame (16) for fastening the blade support (4) for the upper blade (6), which frame (16) is guided to be displaceable perpendicular to the running plane (13-13) of the strip to perform a cutting stroke movement (arrow direction e, f) of the upper blade (6) in the running frame (3) and is driven by the eccentric shaft (10), which is connected to the cutting frame (16) by means of a second eccentric pin (17) and a sliding block displaceable in the running frame (3) perpendicular to the running plane (13-13) of the strip, wherein the lower blade support (5) with the lower blade (7) is fastened to the running frame (3) and with this during a cutting process performs a feed and return movement (c, d) parallel to the running plane (13-13) of the strip, and because of the feed and return movement (c, d) of the running frame (3) and the cutting stroke movement (e, f) of the cutting frame (16), the upper blade support (4) with the upper blade (6) describes an elliptical movement (19) between a top dead centre (OT) and a bottom dead centre (UT), in the region of which the upper and lower blades (6, 7) assume a cutting position (6a, 7a) forming a cutting gap (20) between the blade edges to perform a cut transversely to the running direction (c) of the strip.

8. Eccentric shears (1) for cutting off sheets (2a) from a continuously fed metal strip (2) in an unsupported manner, with an upper and lower blade (6, 7) arranged in a scissor frame and also with an eccentric drive mechanism (10) for a feed and return movement of the blades in and against the running direction (c) of the strip and also for a cutting stroke movement (e, f) of at least one blade (6) perpendicular to the running plane (13-13) of the strip, **characterised by** a running frame (3) to receive two blade supports (4, 5) for an upper blade (6) and a lower blade (7), which frame (3) can be moved by means of two coaxial motor-driven eccentric shafts (38), which are arranged on the two face sides (8, 9) of the running frame (3), are rotatably disposed in a base frame (11) and each have an eccentric pin (39), which is articulated to a slide block (14) guided in the running frame (3) to be displaceable perpendicular to the running plane (13-13) of the strip, on guide means (15) of the base frame (11) parallel to the running plane (13-13) of the strip to perform a feed and a return movement of the cutting blades (6, 7) in and against the running direction (c, d) of the strip, and by a cutting frame (16) for fastening the blade support (4) of the upper blade (6), which is guided to be displaceable perpendicular to the running plane of the strip to perform a cutting stroke movement of the upper blade (6) in the running frame (3) and is driven by two further coaxial motor-driven eccentric shafts (40), which are arranged on the two face sides (8, 9) of the running frame (3) parallel to the eccentric shafts (38) for the forward feed, and which are each connected to the cutting frame (16) via an eccentric pin (41) and a connecting rod (42), wherein the eccentric pin (39) of the eccentric shafts (38) for the feed drive of the upper and lower blades (6, 7) and the eccentric pins (41) of the eccentric shafts (40) for the cutting stroke drive of the upper blade (6) have different eccentric radii (39a, 41a), the eccentric shafts (38, 40) arranged in pairs on the two face sides (8, 9) of the running frame (3) for the forward feed and the cutting stroke of the blades (6, 7) are coupled to one another via a transmission (43), in particular a gear or traction transmission, and are driven by a common drive motor (44), and the lower blade support (5) for the lower blade (7) is fastened to the running frame (3).

9. Eccentric shears according to one of Claims 1 to 8, **characterised by** a pivoting device for the upper blade (6) and lower blade (7) for performing angular cuts with an adjustable angle diagonally to the running direction of the strip.

10. Eccentric shears according to Claim 9, **characterised by** a rotatable mounting of the upper blade support (4) in the cutting frame (16) and of the lower blade support (5) in the running frame (3), a parallel guidance of the upper blade support (4) performing the cutting stroke to the lower blade support (5) in guide pillars (23, 24) arranged on this as well as a pivot drive of the blade supports (4, 5) by means accompanying drives attached to the running frame (3) and/or cutting frame (16) or a stationary drive fastened to the base frame (11).

11. Eccentric shears according to Claim 10, **characterised by** the use of one or more electric motors, in particular torque motors, hydraulic motors or hydraulic cylinders for the pivot drive of the blade supports (4, 5).

12. Eccentric shears according to Claim 11, **characterised by** two electric motors (25, 26) installed in the running frame (3) to be diametrically opposed, having drive pinions (27, 28), which cooperate with a gear (29) sitting on the bearing journal (22) of the lower blade support (5).

13. Eccentric shears according to Claim 11, **characterised by** a pivot drive of the blade supports (4, 5) by means of a torque motor (30), the core (31) of which is fastened to the running frame (3) and its rotatably driven outer ring (32) is fastened on the lower blade support (5).

14. Eccentric shears according to Claim 10 and 11, **characterised by** a pivot drive of the upper and lower blade (6, 7) by means of a compound slide system, which comprises an actuating cylinder (33) fastened to the base frame (11) for linear adjustment of a slide (34) displaceably guided on the base frame (11) transversely (g, h) to the running direction (c) of the strip and also a sliding pad (35) guided in the slide (34) to be displaceable in and against the running direction (c) of the strip, said sliding pad being articulated to a pivot arm (36) fixedly arranged on the bearing journal (22) of the lower blade support (5).

15. Eccentric shears according to one of Claims 1 to 14, **characterised by** a position of the shears (1, 37) that is inclined or raised relative to the horizontal.

## Revendications

1. Cisaille (1) excentrique pour découper à la volée des flans (2a) d'une bande (2) de métal alimentée en continu, comportant une lame (6) supérieure et une lame (7) inférieure disposées dans un bâti de cisaille, et comportant un entraînement (10) excentrique pour une translation d'avancement et de retour des lames dans le sens (c) de circulation de la bande et en sens contraire ainsi que pour une translation (e, f) de coupe d'au moins une lame (6) perpendiculairement au plan (13-13) de circulation de la bande, **caractérisée par** un bâti (3) mobile destiné à recevoir deux porte-lames (4, 5) pour une lame (6) supérieure et une lame (7) inférieure, bâti (3) qui - au moyen d'au moins un arbre (10) excentrique entraîné par moteur, monté à rotation dans un bâti (11) de base à poste fixe et doté d'un premier tourillon (12) excentrique qui est relié en articulation à un coulisseau (14) guidé en coulissement dans le bâti (3) mobile perpendiculairement (sens des flèches a, b) au plan (13-13) de circulation de la bande - peut être déplacé en translation parallèlement au plan (13-13) de circulation de la bande sur des guides (15) du bâti (11) de base afin d'effectuer une translation d'avancement et de retour des lames (6, 7) dans le sens (c) de circulation de la bande et en sens (d) contraire, et par un bâti (16) de coupe pour la fixation du porte-lame (4) pour la lame (6) supérieure, bâti (16) qui, afin d'effectuer une translation de coupe (sens des flèches e, f) de la lame (6) supérieure, est guidé en coulissement dans le bâti (3) mobile perpendiculairement au plan (13-13) de circulation de la bande et est entraîné par l'arbre (10) excentrique qui est relié au bâti (16) de coupe par l'intermédiaire d'un deuxième tourillon (17) excentrique et d'une bielle (18), sachant que le porte-lame (5) inférieur muni de la lame (7) inférieure est fixé sur le bâti (3) mobile et, lors d'un processus de coupe, accomplit avec ce dernier une translation (c, d) d'avancement et de retour parallèlement au plan (13-13) de circulation de la bande, et que le porte-lame (4) supérieur muni de la lame (6) supérieure, du fait de la translation (c, d) d'avancement et de retour du bâti (3) mobile et de la translation (e, f) de coupe du bâti (16) de coupe, décrit une trajectoire (19) elliptique entre un point (OT) mort haut et un point (UT) mort bas dans la région duquel la lame (6) supérieure et la lame (7) inférieure prennent une position (6a, 7a) de coupe en formant une emprise (20) de coupe entre les tranchants des lames afin d'effectuer une coupe transversalement au sens (c) de circulation de la bande.

2. Cisaille excentrique suivant la revendication 1, **caractérisée en ce que** les deux tourillons (12, 17) excentriques de l'arbre (10) excentrique possèdent des rayons (12a, 17a) d'excentrique différents.

3. Cisaille excentrique suivant la revendication 1, **caractérisée par** un rayon excentrique commun des deux tourillons (12, 17) excentriques de l'arbre (10) excentrique, ainsi que par un entraînement excentrique du bâti (16) de coupe au moyen d'une bielle (18).

4. Cisaille (1) excentrique pour découper à la volée des flans (2a) d'une bande (2) de métal alimentée en continu, comportant une lame (6) supérieure et une lame (7) inférieure disposées dans un bâti de cisaille, et comportant un entraînement (10) excentrique pour une translation d'avancement et de retour des lames dans le sens (c) de circulation de la bande et en sens contraire ainsi que pour une translation (e, f) de coupe d'au moins une lame (6) perpendiculairement au plan (13-13) de circulation de la bande, **caractérisée par** un bâti (3) mobile destiné à recevoir deux porte-lames (4, 5) pour une lame (6) supérieure et une lame (7) inférieure, bâti (3) qui - au moyen d'au moins un arbre (10) excentrique entraîné par moteur, monté à rotation dans un bâti (11) de base à poste fixe et doté d'un premier tourillon (12) excentrique qui est relié en articulation à un coulisseau (14) guidé en coulissement dans le bâti (3) mobile perpendiculairement (sens des flèches a, b) au plan (13-13) de circulation de la bande - peut être déplacé en translation parallèlement au plan (13-13) de circulation de la bande sur des guides (15) du bâti (11) de base afin d'effectuer une translation d'avancement et de retour des lames (6, 7) dans le sens (c) de circulation de la bande et en sens (d) contraire, et par un bâti (16) de coupe pour la fixation du porte-lame (4) pour la lame (6) supérieure, bâti (16) qui, afin d'effectuer une translation de coupe (sens des flèches e, f) de la lame (6) supérieure, est guidé en coulissement dans le bâti (3) mobile perpendiculairement au plan (13-13) de circulation de la bande et est entraîné par l'arbre (10) excentrique qui est relié au bâti (16) de coupe par l'intermédiaire d'un deuxième tourillon (17) excentrique de même rayon d'excentrique que le premier tourillon (12) excentrique, sachant que le porte-lame (5) inférieur muni de la lame (7) inférieure est fixé sur le bâti (3) mobile et, lors d'un processus de coupe, accomplit avec ce dernier une translation (c, d) d'avancement et de retour parallèlement au plan (13-13) de circulation de la bande, et que le porte-lame (4) supérieur muni de la lame (6) supérieure, du fait de la translation (c, d) d'avancement et de retour du bâti (3) mobile et de la translation (e, f) de coupe du bâti (16) de coupe, décrit une trajectoire (19) elliptique entre un point (OT) mort haut et un point (UT) mort bas dans la région duquel la lame (6) supérieure et la lame (7) inférieure prennent une position (6a, 7a) de coupe en formant une emprise (20) de coupe entre les tranchants des lames afin d'effectuer une coupe transversalement au sens (c) de circulation de la bande.

5. Cisaille excentrique suivant l'une des revendications 1 à 4, **caractérisée par** un entraînement au moyen de deux arbres (10) excentriques coaxiaux disposés sur les deux côtés (8, 9) frontaux du bâti (3) mobile et dotés d'un moteur d'entraînement électrique à régulation de régime, arbres qui sont montés à rotation dans le bâti (11) de base.

6. Cisaille excentrique suivant la revendication 5, **caractérisée par** une synchronisation des moteurs d'entraînement des deux arbres (10) excentriques via des mécanismes de transmission et un arbre de marche synchrone.

7. Cisaille (1) excentrique pour découper à la volée des flans (2a) d'une bande (2) de métal alimentée en continu, comportant une lame (6) supérieure et une lame (7) inférieure disposées dans un bâti de cisaille, et comportant un entraînement (10) excentrique pour une translation d'avancement et de retour des lames dans le sens (c) de circulation de la bande et en sens contraire et pour une translation (e, f) de coupe d'au moins une lame (6) perpendiculairement au plan (13-13) de circulation de la bande, **caractérisée par** un bâti (3) mobile destiné à recevoir deux porte-lames (4, 5) pour une lame (6) supérieure et une lame (7) inférieure, bâti (3) qui - au moyen d'au moins un arbre (10) excentrique entraîné par moteur, monté à rotation dans un bâti (11) de base à poste fixe et doté d'un premier tourillon (12) excentrique qui est relié en articulation par une bielle au bâti (3) mobile - peut être déplacé en translation parallèlement au plan (13-13) de circulation de la bande sur des guides (15) du bâti (11) de base afin d'effectuer une translation d'avancement et de retour des lames (6, 7) dans le sens (c) de circulation de la bande et en sens (d) contraire, et par un bâti (16) de coupe pour la fixation du porte-lame (4) pour la lame (6) supérieure, bâti (16) qui, afin d'effectuer une translation de coupe (sens des flèches e, f) de la lame (6) supérieure, est guidé en coulissement dans le bâti (3) mobile perpendiculairement au plan (13-13) de circulation de la bande et est entraîné par l'arbre (10) excentrique qui est relié au bâti (16) de coupe par l'intermédiaire d'un deuxième tourillon (17) excentrique et d'un coulisseau pouvant coulisser dans le bâti (3) mobile perpendiculairement au plan (13-13) de circulation de la bande, sachant que le porte-lame (5) inférieur muni de la lame (7) inférieure est fixé sur le bâti (3) mobile et, lors d'un processus de coupe, accomplit avec ce dernier une translation (c, d) d'avancement et de retour parallèlement au plan (13-13) de circulation de la bande, et que le porte-lame (4) supérieur muni de la lame (6) supérieure, du fait de la translation (c, d) d'avancement et de retour du bâti (3) mobile et de la translation (e, f) de coupe du bâti (16) de coupe, décrit une trajectoire (19) elliptique entre un point (OT) mort haut et un point (UT) mort bas dans la région duquel la lame (6) supérieure et la lame (7) inférieure prennent une position (6a, 7a) de coupe en formant une emprise (20) de coupe entre les tranchants des lames afin d'effectuer une coupe transversalement au sens (c) de circulation de la bande.

8. Cisaille (1) excentrique pour découper à la volée des flans (2a) d'une bande (2) de métal alimentée en continu, comportant une lame (6) supérieure et une lame (7) inférieure disposées dans un bâti de cisaille, et comportant un entraînement (10) excentrique pour une translation d'avancement et de retour des lames dans le sens (c) de circulation de la bande et en sens contraire ainsi que pour une translation (e, f) de coupe d'au moins une lame (6) perpendiculairement au plan (13-13) de circulation de la bande, **caractérisée par** un bâti (3) mobile destiné à recevoir deux porte-lames (4, 5) pour une lame (6) supérieure et une lame (7) inférieure, bâti (3) qui - au moyen de deux arbres (38) excentriques coaxiaux entraînés par moteur, disposés sur les deux côtés (8, 9) frontaux du bâti (3) mobile, arbres qui sont montés à rotation dans un bâti (11) de base et qui comportent chacun un tourillon (39) excentrique qui est relié en articulation à un coulisseau (14) guidé en coulissement dans le bâti (3) mobile perpendiculairement au plan (13-13) de circulation de la bande - peut être déplacé en translation parallèlement au plan (13-13) de circulation de la bande sur des guides (15) du bâti (11) de base afin d'effectuer une translation d'avancement et de retour des lames (6, 7) dans le sens (c) de circulation de la bande et en sens (d) contraire, et par un bâti (16) de coupe pour la fixation du porte-lame (4) de la lame (6) supérieure, bâti qui, afin d'effectuer une translation de coupe de la lame (6) supérieure, est guidé en coulissement dans le bâti (3) mobile perpendiculairement au plan de circulation de la bande et est entraîné par deux autres arbres (40) excentriques coaxiaux entraînés par moteur, qui sont disposés sur les deux côtés (8, 9) frontaux du bâti (3) mobile parallèlement aux arbres (38) excentriques destinés à l'avancement et qui sont respectivement reliés au bâti (16) de coupe par l'intermédiaire d'un tourillon (41) excentrique et d'une bielle (42), sachant que le tourillon (39) excentrique des arbres (38) excentriques pour l'entraînement d'avancement de la lame (6) supérieure et de la lame (7) inférieure et le tourillon (41) excentrique des arbres (40) excentriques pour l'entraînement de translation de coupe de la lame (6) supérieure possèdent des rayons (39a, 41a) d'excentrique différents, que les arbres (38, 40) excentriques pour l'avancement et pour la translation de coupe des lames (6, 7), disposés par paires sur les deux côtés (8, 9) frontaux du bâti (3) mobile, sont couplés entre eux au moyen d'un mécanisme (43) de transmission, notamment d'une transmission par engrenages ou à moyen de traction, et sont entraînés par un moteur (44) d'entraînement commun, et que le porte-lame (5) inférieur pour la lame (7) inférieure est fixé sur le bâti (3) mobile.

9. Cisaille excentrique suivant l'une des revendications 1 à 8, **caractérisée par** un dispositif de pivotement pour la lame (6) supérieure et la lame (7) inférieure afin d'effectuer des coupes biaises avec un angle réglable en oblique par rapport au sens de circulation de la bande.

10. Cisaille excentrique suivant la revendication 9, **caractérisée par** un montage rotatif du porte-lame (4) supérieur dans le bâti (16) de coupe et du porte-lame (5) inférieur dans le bâti (3) mobile, un guidage en parallèle du porte-lame (4) supérieur accomplissant la translation de coupe par rapport au porte-lame (5) inférieur dans des colonnes (23, 24) de guidage disposées sur ce dernier, et un entraînement en pivotement des porte-lames (4, 5) au moyen d'entraînements conjointement mobiles disposés sur le bâti (3) mobile et/ou le bâti (16) de coupe, ou d'un entraînement à poste fixe fixé sur le bâti (11) de base.

11. Cisaille excentrique suivant la revendication 10, **caractérisée par** l'utilisation d'un ou plusieurs moteurs électriques, en particulier de moteurs-couples, de moteurs hydrauliques ou de vérins hydrauliques pour l'entraînement en pivotement des porte-lames (4, 5).

12. Cisaille excentrique suivant la revendication 11, **caractérisée par** deux moteurs (25, 26) électriques installés dans le bâti (3) mobile en étant diamétralement opposés et pourvus de pignons (27, 28) d'entraînement qui coopèrent avec une roue (29) dentée montée sur le pivot (22) du porte-lame (5) inférieur.

13. Cisaille excentrique suivant la revendication 11, **caractérisée par** un entraînement en pivotement des porte-lames (4, 5) au moyen d'un moteur-couple (30) dont le noyau (31) est fixé sur le bâti (3) mobile et dont la bague (32) extérieure entraînée en rotation est fixée sur le porte-lame (5) inférieur.

14. Cisaille excentrique suivant les revendications 10 et 11, **caractérisée par** un entraînement en pivotement de la lame (6) supérieure et de la lame (7) inférieure au moyen d'un système à chariot en croix qui comprend un vérin (33) fixé sur le bâti (11) de base pour le déplacement linéaire d'une coulisse (34) guidée en coulissement sur le bâti (11) de base transversalement (g, h) au sens (c) de circulation de la bande, ainsi qu'un coulisseau (35) guidé en coulissement dans la coulisse (34) dans le sens (c) de circulation de la bande et en sens contraire, coulisseau qui est relié en articulation à un bras (36) pivotant disposé fixement sur le pivot (22) du porte-lame (5) inférieur.

15. Cisaille excentrique suivant l'une des revendications 1 à 14, **caractérisée par** une position de la cisaille (1, 37) qui est inclinée ou relevée par rapport à l'horizontale.
